# NEUE EUROPÄISCHE PATENTSCHRIFT

(11) **EP 2 476 607 B2**
(45) Veröffentlichungstag und Bekanntmachung des Hinweises auf die Entscheidung über den Einspruch: **31.12.2025**
(45) Hinweis auf die Patenterteilung: 05.06.2013
(21) Anmeldenummer: 11009298.8
(22) Anmeldetag: 23.11.2011
(51) Int. Cl.: B62K 3/00, B62J 1/00, B62K 9/02

(54) **Kleinkind-Roller**
Scooter for small child
Trottinette pour petits enfants

(30) Priorität: 17.01.2011 DE 202011001596 U
(43) Veröffentlichungstag der Anmeldung: 18.07.2012
(73) Patentinhaber: Micro Mobility Systems AG, 8700 Küsnacht (CH)
(72) Erfinder: Ouboter, Jan Willem Anton, 8707 Uetikon am See (CH)
(74) Vertreter: Grünecker Patent- und Rechtsanwälte PartG mbB

(56) Entgegenhaltungen:
- FR-A1- 2 467 003
- US-A- 4 941 670

## Beschreibung

Die vorliegende Erfindung betrifft ein Fahrgerät für Kleinkinder, insbesondere einen Kleinkind-Roller.

Roller bzw. Tretroller haben Anfang 2000 eine Renaissance erfahren, die auf die Modernisierung des althergebrachten Rollerkonzepts mit neuen Materialien und insbesondere mit verbesserten Fahreigenschaften zurückzuführen ist. Hierbei haben sich insbesondere die folgenden drei Typen durchgesetzt:
Zum einen der zweirädrige, vorzugsweise aus Aluminium gefertigte Klappscooter, zum anderen das in der Regel dreirädrig ausgeführte Kickboard (eingetragene europäische Marke der Micro Mobility Systems AG), mit den Merkmalen eines aus Holz gefertigten und konkav geformten flexiblen Trittbrettes und schließlich eine Art Mischung aus beiden Grundmodellen, nämlich den zweirädrigen Scooter ebenfalls mit sog. Flexdeck, d.h. einem aus Holz gefertigtem konkav geformten flexiblen Trittbrett. Zweirädrige Scooter haben dabei in der Regel höhenverstellbare Lenker mit Griffen ähnlich einem kurz ausgebildeten Fahrradlenker. Kickboards haben dagegen in der Regel lediglich eine Lenkstange mit kugelförmigem Abschluss aus Plastik.

Das Kickboard wird gattungsbildend als 3-Wheeler bezeichnet und hat viele Nachahmer gefunden. Der Vorteil des Kickboards liegt darin, dass das Fahrverhalten dynamischer ist als bei dem zweirädrigen starren Scooter, das Fahrverhalten ist somit mehr dem eines Skateboards angenähert. Aufgrund der vorhandenen Lenkstange ist es jedoch bei weitem einfacher zu fahren als ein Skateboard und aufgrund der in der Regel vorhandenen zwei Vorderräder und einem Hinterrad ist es andererseits auch leichter zu fahren als ein zweirädriger Scooter, insbesondere für Kleinkinder.

Da das Kickboard, anders als Skateboards, dennoch ein Fahrgerät ist, dass auf öffentlichen Straßen benutzt werden kann und soll, ist seine Konstruktion diesbezüglich stabil ausgelegt, anders als dies bei den für Extremsport oder ein zum Spielen ausgelegten Skateboards.

Aufgrund dieser sehr soliden Ausführung und für ein solides Fahrverhalten erforderliche Mindestgröße sind Kickboards mehr für Jugendliche und Erwachsene geeignet als für Kinder oder Kleinkinder.

Diesem Problem entgegentretend hat die vorliegende Anmelderin im Jahr 2006 ein Kinderkickboard entwickelt, das vom Design und Fahrverhalten dem Kickboard stark angenähert ist, jedoch nahezu vollständig aus Plastik gefertigt ist. Aufgrund dieser Tatsache ist das entsprechende Fahrgerät sehr leicht und somit auch für Kleinkinder geeignet. Darüber hinaus ist die Fertigung günstig und es können entsprechend günstige Preise erzielt werden. Schließlich können bei diesem Design jegliche scharfe Kanten oder harte Materialien vermieden werden, so dass eine Verletzungsgefahr minimiert ist. Darüber hinaus ist die Lenkstange den Bedürfnissen von Kleinkindern entsprechend verkürzt ausgeführt.

Dieses Kinderkickboard hat sich mittlerweile zu einem Trendsetter entwickelt und ist bei Kindern sowie verantwortlichen Erwachsenen dementsprechend beliebt.

Obwohl es bereits Zweijährige gibt, die mit dem Kinderkickboard problemlos fahren können und diese Kinderkickboards zunehmend entsprechende Laufräder ablösen, kann generell gesagt werden, dass für Kinder mit zwei Jahren oder darunter das Fahren auf einem Kinderkickboard gewisse Gefahren aufgrund von möglichen Stürzen birgt. Kinder mit zwei Jahren und darunter verwenden daher nach wie vor herkömmliche Dreiräder zum Sitzen, Traktoren und dergleichen. Besondere Beliebtheit erfährt dabei das Bobby-Car (eingetragene Marke der Firma BIG). Auch dieser Entwurf ist gekennzeichnet durch geringes Gewicht, stabile Ausführung, stumpfe Kanten und gutes Fahrverhalten.

FR 2 467 003 A1 offenbart, aus dem ursprünglichen Französischen übersetzt, ein konvertierbares Fahrzeug. Bekannt sind Rollbretter, die im Wesentlichen aus einem Brett bestehen, das auf zweier "Trucks" montiert ist, wobei die Trucks elastische Kontakte aufweisen. Rollbretter weisen wegen der elastischen Kontakte in Abhängigkeit von Körpergewichtsverlagerung erhebliche Lenkbarkeit auf. Das offenbarte konvertierbare Fahrzeug wird aus einem im Handel erhältlichen Rollbrett durch Anpassung einer Handauflageeinrichtung und einer Sitzeinrichtung anhand einschlägigen Schnellmontage- und Schnelldemontagemittels ausgeführt. Die Handauflageeinrichtung kann aus einer Stange bestehen, die im unteren Teil eine laschenförmige Ausdehnung aufweist, die zur Befestigung zum vorderen Teil des Bretts dient. Die Sitzeinrichtung kann aus einer Stange bestehen, die im unteren Teil eine laschenförmige Ausdehnung aufweist, die zur Befestigung zum hinteren Teil des Bretts dient.

US 4 941 670 A offenbart, aus dem ursprünglichen Englischen übersetzt, eine leichtgewichtige, einfach gelagerte, tragbare, starke Aufsitzvorrichtung zur Beförderung und Fahrtechnik ("stunt riding"). Die Vorrichtung kann auf einer Stützfläche benutzt werden und weist einen V-förmigen Rahmen auf, auf dem eine obere und eine untere Körperstabilisierungs- und Körperstützungseinrichtung montiert werden. Mindestens zwei Räder werden jeweils zu einem von zweier Radträgern drehbar angeschlossen, derart, dass die Vorrichtung von Potenzialenergie bzw. kinetischer Energie angetrieben werden kann. Die Vorrichtungsfahrtrichtung wird von der nichtperpendikularen Platzierung des Rahmens bezüglich der Stützfläche bestimmt. Die Vorrichtung weist außerdem eine Bremseinrichtung auf.

Die Aufgabe der vorliegenden Erfindung ist es, eine Kickboard- oder Scooter-Version vorzuschlagen, die auch für Kleinkinder im Alter unter drei Jahren gut geeignet ist.

Diese Aufgabe wird gelöst durch den Gegenstand des Anspruchs 1.

Bevorzugte Ausführungsformen sind Gegenstand der Unteransprüche.

Die Zeichnungen zeigen im Einzelnen:
Fig. 1 eine bevorzugte Ausführungsform des erfindungsgemäßen Fahrgerätes;
Fig. 2 eine weitere bevorzugte Ausführungsform des erfindungsgemäßen Fahrgerätes;
Fig. 3 eine Ausführungsform zur Erläuterung der modularen Konzeption des erfindungsgemäßen Fahrgeräts gemäß einer Variante die als solche nicht unter Anspruch 1 fällt;
Fig. 4 eine weitere Ausführungsform zur Erläuterung der modularen Konzeption des erfindungsgemäßen Fahrgeräts gemäß einer Variante die als solche nicht unter Anspruch 1 fällt;
Fig. 5 und Fig. 6 eine Detailansicht zu bestimmten Bauteilen gemäß einer bevorzugten Ausführungsform des erfindungsgemäßen Fahrgeräts;
Fig. 7 eine Frontansicht einer weiteren bevorzugten Ausführungsform des erfindungsgemäßen Fahrgeräts;
Fig. 8 eine Ausführungsform des Fahrgeräts, die nicht unter Anspruch 1 fällt; und
Fig. 9 eine weitere Ausführungsform des Fahrgeräts, die nicht unter Anspruch 1 fällt.

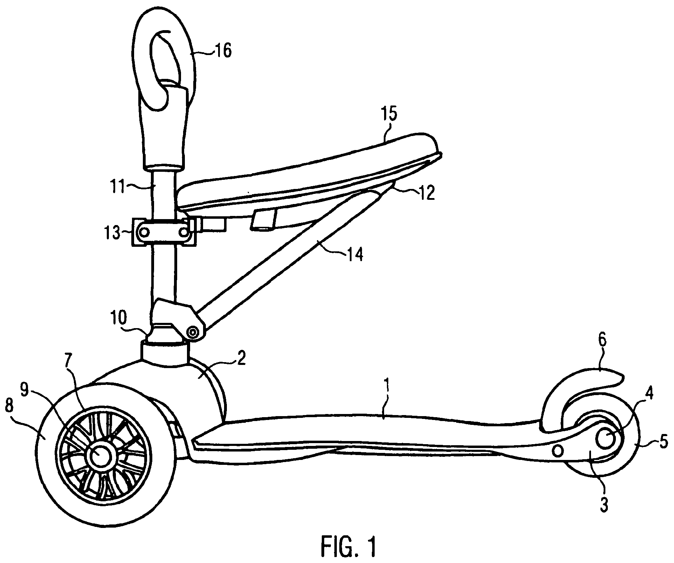

Fig. 1 zeigt eine bevorzugte Ausführungsform des erfindungsgemäßen Fahrgerätes für Kleinkinder. Vereinfacht gesprochen, besteht das neuartige Fahrgerät im Grundkonzept aus einem Kickboard für Kleinkinder, das zusätzlich mit einem Sattel oder Sitz und einer besonderen Lenkeinrichtung ausgestattet ist. Das Fahrgerät besteht somit aus einem Trittbrett 1, welches einem herkömmlichen Kickboard angenähert ist und eine konkave Form aufweist. Dieses Trittbrett ist, anders als beim Kickboard, aus Plastik geformt. Integriert mit der Trittfläche 1 ist ein vorderer Fahrwerkträger 2 und ein hinterer Fahrwerkträger 3 ausgebildet. Der hintere Fahrzeugträger 3 weist eine Achse 4 auf, um die sich das relativ klein ausgeführte Hinterrad 5 dreht. In üblicher Weise, wie bei Kickboards, ist am Hinterrad zusätzlich eine, mit dem Fuß zu betätigende Bremsvorrichtung 6 ausgebildet, die vom Benutzer mit dem Fuß gegen eine Federwirkung nach unten gedrückt werden kann, um dadurch am Rad 5 zu reiben und somit eine Bremswirkung zu entfalten. Ebenso wie das Trittbrett ist diese Bremse aus Plastik ausgeführt.

Der vordere Fahrwerksträger trägt einen Lenkmechanismus 7 sowie zwei große Vorderräder 8, die um eine Achse 9 drehbar gelagert sind.

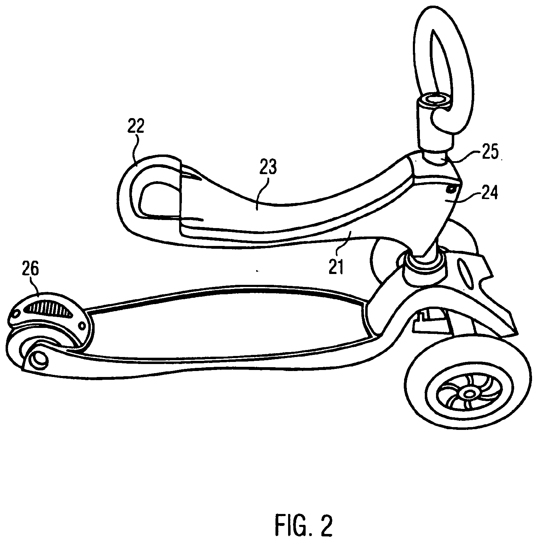

Der vordere Fahrwerksträger ist kuppelartig ausgeführt und nach vorne hin gegabelt. Die Form dieses Fahrwerksträgers ist in Fig. 2 nochmals im Detail dargestellt. Auf diese Darstellung wird im Folgenden zurückzukommen sein.

Mittig weist der vordere Fahrwerksträger eine Basis 10 auf, in die eine Lenkstange 11 gesteckt, geschraubt oder geklebt ist. An der Lenkstange befestigt ist eine Sitzeinrichtung 12, die mit einer Schraubverbindung 13 im oberen Bereich der Lenkstange befestigt ist. Diese Sitzeinrichtung wird zur verbesserten Stabilität zusätzlich von einer Strebe 14 gestützt, die sich zum einen am hinteren unteren Teil der Sitzeinrichtung abstützt und zum anderen im unteren Bereich der Lenkstange 11 abstützt. Dementsprechend verläuft die Strebe im fahrbereiten Zustand vorzugsweise ausgehend vom unteren hinteren Sitzbereich schräg nach unten in Richtung Lenkstange.

Die Grundkonstruktion der Sitzeinrichtung bzw. des Sattels einschließlich der Strebe kann aus Plastik oder Aluminium gebildet sein. Die Befestigung der Sitzeinrichtung am oberen Bereich der Lenkstange erfolgt vorzugsweise durch Schraubschellen, wobei hier auch andere, dem Fachmann bekannten, Lösungen denkbar sind, die eine feste Verbindung der Sitzeinrichtung mit der Lenkstange ermöglichen. Im oberen Bereich weist die Sitzeinrichtung einen gepolsterten Bereich 15 auf, wobei dieser Bereich vorzugsweise aus einer Schaumstoff- oder Plastiklage besteht, der fest mit den darunterliegenden unterstützenden Elementen verbunden ist.

Auf die Lenkstange aufgesteckt oder geschraubt oder geklebt ist ein Haltegriff 16, der vorzugsweise ringförmig ausgebildet ist. Besonders bevorzugt weist der Haltering eine elliptische Form auf. Diese Art des Griffes hat sich in Versuchen als besonders geeignet für Kleinkinder erwiesen. Es ist somit weder eine Lenkstange, die gewisse Verletzungsgefahren birgt noch ein kugelförmiges Abschlusselement, wie beim Kickboard, welches für Kleinkinder zu schwierig zu greifen ist und ein schwierigeres Lenkverhalten zur Folge hätte. Das ringförmige Halteelement kann von Kleinkindern mit zwei Händen gegriffen werden und birgt aufgrund seiner runden Ausführungsform sehr geringe Verletzungsgefahren. Der Radius des Kreiselements ist so bemessen, dass einerseits ein bequemes Greifen für Kleinkinder möglich ist und andererseits genug Hebelwirkung entfaltet wird, um Kurven fahren zu können.

Fig. 2 zeigt eine weitere bevorzugte Ausführungsform des erfindungsgemäßen neuen Fahrgerätes. Abweichend von Fig. 1 weist diese Ausführungsform eine andere Art von Sitzeinrichtung auf. Bei dieser Variante ist die Sitzeinrichtung 21 "bananenförmig" ausgebildet und geht im hinteren Teil in ein Griffelement 22 über. Die gesamte bananenförmig ausgeführte Sitzeinrichtung ist mit einem Polsterelement 23 überzogen. Das Design ist dem eines Motocross-Motorrads angenähert. Dieses Design erlaubt ein besonders bequemes Sitzen. Die schlanke Ausführungsform garantiert, dass Kleinkinder gut sitzen können sowie aufgrund der Rundungen und des langen Polsterbereiches ein besonders geringes Gefahrenpotential. Der Griff im hinteren Bereich gestattet zusammen mit dem Haltegriff 16 ein besonders leichtes Transportieren des Fahrgerätes, wobei das Transportieren aufgrund des geringen Gesamtgewichts bei dieser Variante auch von Kleinkindern bewerkstelligt werden kann. Die bananenförmig ausgeführte Sitzeinrichtung geht im vorderen Teil zur Lenkstange hin in eine integral ausgeführte Befestigungseinrichtung 24 über, die im montierten Zustand von der Lenkstange 25 durchdrungen wird. Für den Fachmann ist klar, dass aufgrund der Ausdehnung der Sitzeinrichtung im Bereich der Befestigung mit der Lenkstange eine besonders stabile und hohe Kräfte aufnehmende Verbindung erreicht werden kann. Darüber hinaus ist bei dieser Ausführungsform die Lenkstange praktisch vollständig von der integral ausgebildeten Sitzeinrichtung ummantelt, so dass aufgrund des weichen Designs der Sitzeinrichtung keinerlei scharfe Kanten vorhanden sind, an denen sich ein Kleinkind verletzen könnte. Die gezeigte Variante für die Sitzeinrichtung kann auch mit der Variante gemäß Fig. 1 kombiniert werden. Für den Fachmann ist klar, dass die einzelnen Komponenten beliebig miteinander austauschbar sind. Bemerkenswert ist bei der in Fig. 2 gezeigten Variante auch die Bremseinrichtung. Bei dieser Bremseinrichtung 26 wurde darauf geachtet, dass sie für Kleinkinder besonders leicht zu treten ist. Entsprechend ist das Design breit und flach ausgelegt und schmiegt sich um das Hinterrad, wobei das Hinterrad hierdurch auch schützend abgedeckt wird.

Die vorliegende Erfindung erlaubt generell ein modulares Konzept, dessen Varianten teilweise nicht unter Anspruch 1 fallen. Das Trittbrett mit den Fahrwerksträgern und -rädern kann generell so beschaffen sein, dass die Lenkstange samt Sitzeinrichtung entfernbar ist. Dies lässt sich durch Schraubverbindungen oder Steckverbindungen lösen. Dementsprechend kann die Lenkstange mit der Griffeinrichtung und der Sitzeinrichtung entfernt werden und durch eine Lenkstange mit kugelförmigen Abschluss, ähnlich wie bei Kickboards für Erwachsene ersetzt werden. Auf diese Weise wird das Fahrgerät für Kleinkinder in ein Fahrgerät für größere Kinder umgewandelt und "wächst" sozusagen mit. Gemäß der vorliegenden Erfindung ist jedoch auch vorgesehen, dass lediglich die Sitzeinrichtung abnehmbar ist, so dass ein Fahrgerät in Art eines Kickboards für Kleinkinder mit einer Griffeinrichtung entsteht, das sich von den herkömmlichen Kickboards deutlich unterscheidet und für Kleinkinder besser geeignet ist. Schließlich kann als Lenkstange nach Entfernung des Sitzes eine Lenkstange eingesetzt werden, die ähnlich der von Scootern ist, d.h. eine Lenkstange, die ähnlich zu Fahrradlenkern ist. Diese Variante kann somit als nächste Stufe bezeichnet werden und ist noch leichter zu fahren, als die Variante, bei der eine Lenkstange mit kugelförmiger Verdickung eingesteckt wird.

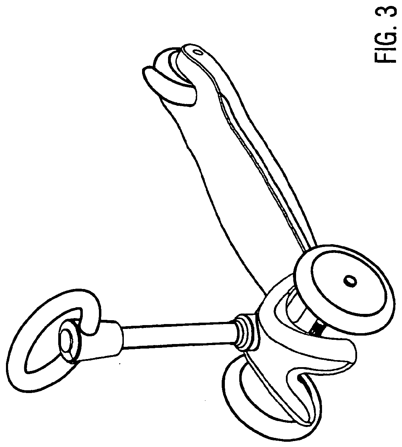

Fig. 3 zeigt das Kinderkickboard mit kurzer Lenkstange mit Haltegriff, ähnlich Fig. 1, aber mit entfernter Sitzeinrichtung.

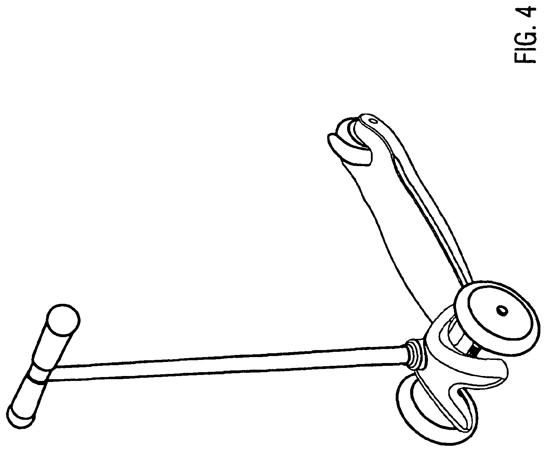

Fig. 4 zeigt das Kinderkickboard von Fig. 3 mit ausgetauschter Lenkstange. Diese Lenkstange entspricht einer Lenkstange wie sie bei Scootern üblich ist, aber mit einem Querlenker, ähnlich wie bei einem Fahrrad.

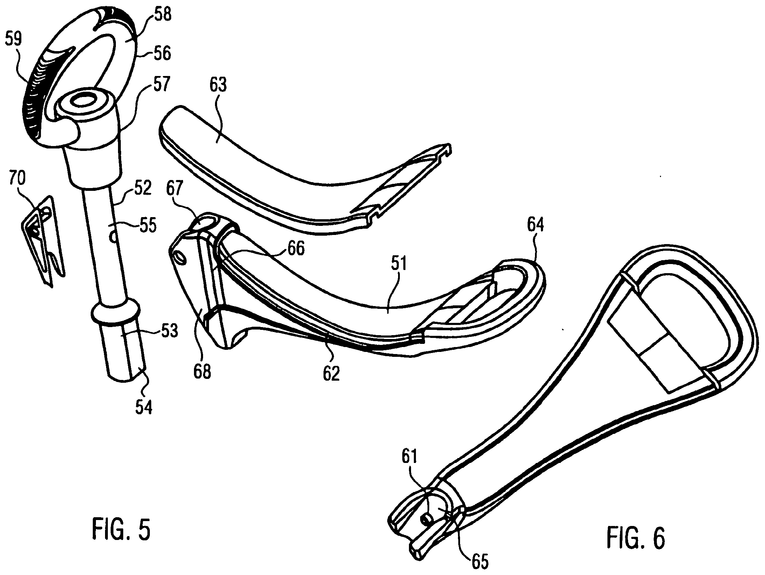

Fig. 5 zeigt nochmals Details einer bevorzugten Ausführungsform des erfindungsgemäßen Fahrgeräts für Kinder. Die gezeigte Ausführungsform entspricht der Variante gemäß Fig. 2, zeigt jedoch verschiedene Details genauer. Zu erkennen ist die Sitzeinrichtung 51 sowie die Lenkeinrichtung 52. Die Lenkeinrichtung besteht aus einem Basiselement 53, welches im Wesentlichen rund ausgeführt ist, jedoch an zumindest zwei Seiten Abschrägungen 54 aufweist, die beim Einstecken des Basiselements in eine korrespondierende Öffnung im vorderen Fahrwerksträger des Kinderkickboards eingesteckt werden kann. Dabei kann die Basis 53 eine Einrichtung zum automatischen Verriegeln oder Verankern aufweisen, so dass nach Einstecken der Basis 53 in die korrespondierende Öffnung am vorderen Fahrwerksträger des Kinderkickboards eine automatische Verriegelung stattfindet. Die Lenkstange 52 weist darüber hinaus einen Mittelteil 55 sowie einen oberen Teil auf, auf dem ein Halteariff 58 aufgesteckt, aufgeklebt oder verschraubt ist. Der Haltegriff 58 weist im Wesentlichen ein Zentralelement 57 auf, mit dem der Haltegriff 58 über die Lenkstange gesteckt wird. In dieses Zentralelement ist ein vorzugsweise elliptisch ausgeformter Haltegriff 58 integriert, wobei der ringförmige Griff auf seiner Oberseite ein Halteprofil 59 aufweist, mit dem ein sicheres Greifen des Ringes durch Kinderhände erreicht werden kann. Die Gesamthöhe der Lenkstange einschließlich Haltegriff ist so bemessen, dass ein Kind von 2 bis 3 Jahren in sitzender Position den Griff bequem halten kann. Zumindest der Griff ist aus Plastik oder Gummi ausgeführt, so dass selbst bei Stürzen eine Verletzungsgefahr minimiert ist. Die elliptische Form erlaubt es, ausreichende Hebelkräfte für das Lenken zu bewirken. Im Mittelteil 55 der Lenkstange befindet sich eine Bohrung 60, die mit einer Nut 61 der Sitzeinrichtung korrespondiert und diese aufnimmt. Die Sitzeinrichtung besteht im Wesentlichen aus einer Basissitzeinrichtung 62, die vorzugsweise aus Plastik geformt ist. Der dadurch erhaltene Sitz weist eine gerundete oder bananenförmige Gestalt auf, so dass ein Kleinkind besonders komfortabel und sicher sitzen kann. Die Oberseite ist mit einer Polsterung 63 versehen, die eine entsprechende Form aufweist und bündig abschließt. Die Polsterung kann gesteckt, geschraubt oder geklebt sein. Die Polsterung selbst ist vorzugsweise aus Gummi oder Schaumstoff ausgeführt. Erkennbar verbreitert sich der Sitz nach hinten hin, so dass er zum Ende breiter ist als im vorderen Bereich. Der Basissitz weist ein Griffelement 64 zu seinem Ende hin auf, wobei das Griffelement bündig in die Sitzeinrichtung überführt, so dass keine Kanten auftreten und die Polsterung bündig bis zum Anfang des Griffes verlaufen kann und dort in den Griff übergeht. Die Sitzeinrichtung insgesamt erinnert an Sitzformen, wie sie aus dem Motocross Sport bekannt sind.

In einer weiteren bevorzugten Ausgestaltung verfügt der Mittelteil 55 über zwei oder mehr Löcher, wodurch der Sitz in unterschiedlichen Höhen fixiert werden kann.

Fig. 6 zeigt den Basissitz von seiner Rückseite, bemerkenswert ist die Nut 61 im Bereich der vorderen Abschrägung 65, die in die erwähnte Bohrung 60 des mittleren Bereichs der Lenkstange eingreifen kann und dort ein Verschwenken des Sitzes verhindert.

Besonders erwähnenswert ist das Profil der Basissitzeinrichtung 62 im vorderen Bereich. Wie gezeigt, ist die Basissitzeinrichtung 62 im hinteren Bereich relativ dünn ausgeführt, gewinnt jedoch aufgrund der Kurvenform nach vorne zunehmend an Höhe, so dass im vorderen Bereich ein Element entsteht, dass sich zumindest 10 cm, vorzugsweise 20 cm, entlang der Lenkstange erstreckt. Dabei hat das vordere Element 66 eine runde Aussparung 67, in der der mittlere Teil der Lenkstange im montierten Zustand verläuft. Wie weiterhin gezeigt, ist das Profil im vorderen Bereich etwa dreiecksförmig ausgeführt, so dass beim Aufsetzen der Basissitzeinrichtung auf die Lenkstange eine Art Schürze sich bis auf die andere Seite der Lenkstange erstreckt. Die entsprechenden zwei Schürzenelemente 68 weisen eine Bohrung 69 auf, durch die im montierten Zustand eine Schraube einsteckbar ist, durch die die beiden Schürzen jeweils an die von den Schürzen umfasste Lenkstange pressen und somit die Sitzeinrichtung zuverlässig an der Lenkstange halten. Aufgrund der relativ langen vertikalen Ausdehnung des vorderen Teils der Basissitzeinrichtung werden Kräfte gut aufgenommen, so dass ein besonders stabiler Sitz und ein besonders sicheres Fahrgerät entsteht. Vorzugsweise wird zusätzlich von vorne eine Plastikklammer 70 zugeführt, durch die die umfasste Lenkstange auch von vorne abgedeckt wird, wobei die Plasticklemme 70 ebenfalls von der erwähnten Schraube gehalten wird und die Plastikklemme hierzu entsprechende Bohrungen aufweist. Die Plastikklemme 70 in Verbindung mit den Schürzen der Basissitzeinrichtung bilden somit eine komplette Verkleidung, die im montierten Zustand den Mittelteil der Lenkstange umfasst, so dass ein besonders kompaktes und optisch schönes Erscheinungsbild entsteht.

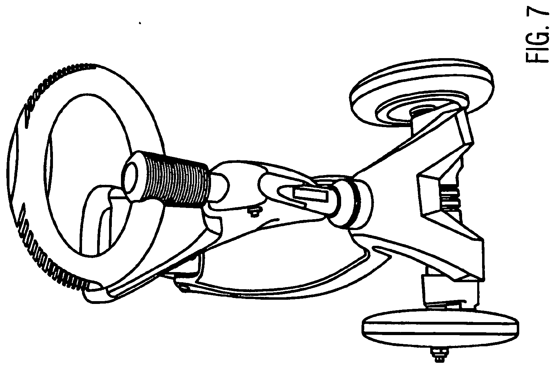

Fig. 7 zeigt nochmals Details der so erhaltenen Struktur. Erkennbar ist die Lenkstange von den Schürzen und dem dazwischen eingefügten Zwischenelement vollständig abgedeckt, wobei sowohl die Schürzen als auch das Zwischenabdeckelement durch die angedeutete Schraube gehalten werden.

Fig. 7 zeigt nochmals den elliptisch gehaltenen Haltegriff sowie das Basiselement auf dem vorderen Fahrwerksträger in das die Lenkstange mit seinem Basiselement eingesteckt ist. Darüber hinaus zeigt Fig. 7 wie sich der vordere Fahrwerksträger gabelt, wobei ein Gabelelement ähnlich einem A entsteht. Andere Ausführungsformen können auch mit Rundungen ausgeführt sein.

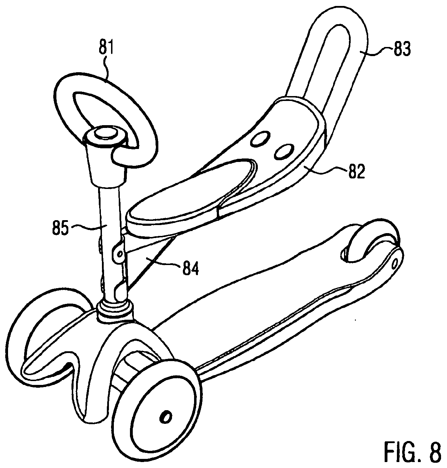

Fig. 8 zeigt eine Ausführungsform des Fahrgerätes, die nicht unter Anspruch 1 fällt, aber für das Verständnis der vorliegenden Erfindung hilfreich sein kann. Zu erkennen ist erneut der vorzugsweise elliptisch ausgeführte Haltegriff 81, eine Sitzeinrichtung 82, wobei die Sitzeinrichtung 82 bei dieser Ausführungsform eine Lehne 83 mit u-förmiger Gestalt aufweist und die Sitzeinrichtung selbst gebogen ausgeführt ist. Zur Befestigung an der Lenkstange ist bei dieser Einrichtung eine Art integrierte Strebe 84 vorgesehen, wobei die Strebe nicht als Rohr ausgeführt ist, sondern als dreiecksförmiges Element, das mit einer Seite an der Lenkstange 85 anliegt und mit einer weiteren Seite die Sitzeinrichtung 82 unterstützt.

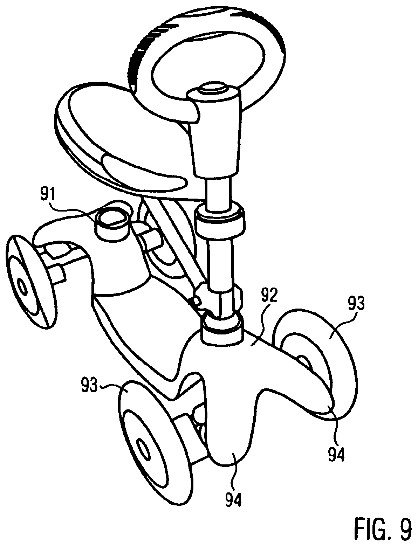

Fig. 9 zeigt schließlich eine weitere Ausführungsform des Fahrgeräts die nicht unter Anspruch 1 fällt, aber für das Verständnis der vorliegenden Erfindung hilfreich sein kann. Diese Ausführungsform weist Ähnlichkeit zu der Ausführungsform gemäß Fig. 1 auf und weist entsprechend eine sichtbare Strebe zur Unterstützung der Sitzeinrichtung auf. Ersichtlicherweise ist bei dieser Ausführungsform vorgesehen, dass nicht 3 sondern 4 Räder vorhanden sind, d.h. auch der hintere Fahrwerksträger trägt 2 Räder. Insbesondere kann auch der hintere Fahrwerksträger ein Basiselement 91 zum Befestigen einer Lenkstange aufweisen, wodurch theoretisch zwei Lenkstangen auf dem Kinderkickboard montierbar sind. Insgesamt ist das Trittbrett nahezu symmetrisch ausgeführt, so dass im Prinzip zwischen vorderen und hinteren Fahrwerksträger kein Unterschied besteht. Durch diese Symmetrie ist dieses Kinderkickboard besonders günstig herzustellen. Darüber hinaus gestattet das weitere Basiselement im hinteren Fahrwerksträger das Einstecken weiterer Teile, wie beispielsweise der Verankerung eines Anhängers, das von dem Kinderkickboard gezogen wird. Vorzugsweise sind als Zubehör zweirädrige Transportanhänger vorgesehen, die mit einem Arm ausgestattet sind, der mit einer Verankerungseinrichtung in das Basiselement des hinteren Fahrwerkträgers eingesteckt werden kann, so dass ein Ziehen des Anhängers erfolgen kann.

Für den Fachmann ist klar, dass sämtliche Varianten gemäß Fig. 1 bis 7 untereinander miteinander kombinierbar sind in dem Sinne, dass beispielsweise die unterschiedlichen gezeigten Sitzeinrichtungen gemäß Fig. 1 bis 7 miteinander austauschbar sind, wobei z.B. der Sitz in allen Varianten höhenverstellbar mit mindestens zwei Sitzpositionen gestaltet ist, indem mehrere Befestigungslöcher für den Sitz vorgesehen sind.

Vorzugsweise sind bei sämtlichen Varianten der vordere Fahrwerksträger 92 aus Plastik oder Gummi ausgeführt und steht mit seinen zwei Spitzen über den Abschluss der Vorderräder 93 über, derart, dass eine Art Stossfänger 94 entsteht, der den Aufprall des Fahrgeräts an Hindernissen, wie Wänden oder Möbeln, mindert. Dadurch ergibt sich eine Minderung des Verletzungsrisikos für das Kind sowie eine Schonung angefahrener Gegenstände.

Der Stoßfänger ist, wie gezeigt, gabelförmig ausgeführt, wobei er quasi im vorderen Fahrwerksträger, der vorzugsweise kuppelförmig ausgeführt ist, integriert ist. Durch die bevorzugte Integration nimmt die gabelförmige Ausgestaltung den kuppelartigen Verlauf mit auf, so dass die zwei Gabelelemente gebogen von oben nach unten zulaufen.

Das erfindungsgemäße Fahrgerät ist, wie oben beschrieben, vorzugsweise vom Grundaufbau wie ein Kinderkickboard beschaffen, jedoch im Wesentlichen mit anderer Lenkeinrichtung, insbesondere dem ovalen Griff und einer Sitzeinrichtung, die vorzugsweise an der Lenkstange befestigt ist. Insbesondere basiert die vorliegende Erfindung auch auf der Idee, das Fahrgerät durch Gewichtsverlagerung zu lenken und somit Kurven zu fahren und nicht über ein Lenkrad, so wie dies beispielsweise bei dem erwähnten Bobby-Car der Fall ist. Wie anhand der verschiedenen Figuren gezeigt, wird die Lenkung über Gewichtsverlagerung insbesondere dadurch erreicht, dass die beiden Vorderräder eine Achsschenkellenkung aufweisen, wobei die beiden Vorderräder insbesondere einen Sturz aufweisen, wodurch sich von vorne betrachtet der Abstand der Vorderräder voneinander nach oben verjüngt. Darüber hinaus können die beiden Vorderräder leicht aus der parallelen Spur laufen, bevorzugter Weise laufen die Spuren der beiden Vorderräder voneinander weg, derart, dass der Abstand der Vorderräder im vordersten Bereich größer ist, als im hinteren Bereich.

Aufgrund dieser Beschaffenheit und insbesondere in Zusammenschau mit der vorhandenen Achsschenkellenkung, wird sich das Fahrgerät bei Gewichtsverlagerung in die gefahrene Kurve neigen, d.h. dass Trittbrett steht während der Kurvenfahrt schräg. Dies hat seine Ursache darin, dass sich aufgrund des erwähnten Sturzes das innere Rad noch weiter neigt, sich die Neigung beim äußeren Rad jedoch verringert und somit die Achse des innen liegenden Rades während der Kurvenfahrt einen geringeren Abstand zum Boden hat, als das äußere Rad. Dies alles wird durch Gewichtsverlagerung bewirkt, wobei die Achsschenkellenkung auf der Unterseite gegen eine Feder arbeitet, die, nachdem die Kraft der Gewichtsverlagerung wieder nachlässt, dafür sorgt, dass sich die Räder wieder gleichmäßig ausrichten. Vorzugsweise weist die Achsschenkellenkung mittig eine u-förmige Spange auf, die auf der Unterseite des Trittbretts befestigt ist und die bei der Gewichtsverlagerung hinsichtlich ihrer Enden in gleicher Ebene seitlich verschoben wird.

Mit dem erfindungsgemäßen Fahrgerät lassen sich somit erheblich engere Radien fahren, als mit typischen Bobby-Cars. Zudem ist diese Art der Steuerung besonders für die Entwicklung der Motorik von Kleinkindern von großer Bedeutung. Gerade im Alter von 1 bis 3 Jahren ist die Anlage dieser anfänglichen Motorik ausschlaggebend für die spätere Entwicklung und die Fähigkeit der Kinder im weiteren Entwicklungsverlauf. Es ist denkbar, das erfindungsgemäße Fahrgerät auch anders auszugestalten, d.h. ohne ein typisches Trittbrett, wie von einem Kickboard. Unter diesem weiteren Aspekt der vorliegenden Erfindung ist allein entscheidend, dass es sich um ein Fahrgerät für Kinder handelt, das mit Gewichtsverlagerung gesteuert werden kann. Vorzugsweise in dem eine Achsschenkellenkung vorgesehen ist. Dieser weitere Aspekt ist unabhängig von den oben gezeigten Figuren und stellt für sich eine Neuerung über bisherige Kinderfahrgeräte dar. Insofern geht es also im Allgemeinen um ein Fahrgerät mit drei Rädern, einer Sitzeinrichtung, einem Haltegriff ohne Lenker und als Alternative zu dem Lenker, um einen Lenkmechanismus, der sich allein durch Gewichtsverlagerung steuern lässt.

Die trotz der verschiedenen Varianten die im Zusammenhang mit Fig. 1 bis 7 für die Sitzeinrichtung gezeigt wurde, ist es besonders bevorzugt, die Sitzeinrichtung ganz ohne Metallteile und möglichst aus einem Plastikstück zu fertigen, auf das möglicherweise dann nochmal eine weichere Sitzauflage aufgetragen ist. Insofern ist eine Konstruktion entsprechend Fig. 2 für die Sitzeinrichtung die bevorzugte Variante, wobei hier charakteristisch ist, dass sich die Sitzeinrichtung auf einem gefertigten Plastiksitz besteht, der in einer Ausfräsung die Lenkstange aufnehmen kann und sich mittels einer Schraube oder mehreren Schrauben an der Lenkstange festklemmen lässt. Wie in Zusammenhang mit Fig. 2 beschrieben, weist eine derartige Konstruktion ein Aussehen ähnlich einem Motocross-Design auf und insbesondere umfassen somit zwei Schürzen links und rechts die Lenkstange und diese Schürzen sind vor der Lenkstange über eine Schraubverbindung gegeneinander verschiebbar, so dass sie die Lenkstange einklemmen.

Typischerweise verbleibt von vorne gesehen ein Abstand zwischen den Schürzen, so dass man von vorne die Lenkstange auf gleicher Höhe noch sehen kann. Damit ein noch integralerer Eindruck entsteht, ist vorzugsweise vorgesehen, von vorne eine Art Decke oder Zwischenstück anzubringen, die sich quasi nahtlos in das Design einfügt, so dass ein insgesamt geschlossener Eindruck entsteht und die Lenkstange somit im Mittelteil vollständig von dieser Gesamtkonstruktion umschlossen ist.

Wie oben erwähnt, kann das erfindungsgemäße Fahrgerät modular ausgeführt sein, so dass ein Umbau entsprechend der Entwicklungsphase des Kindes erreicht werden kann. In der ersten Phase ist das Fahrgerät ähnlich wie Fig. 2 beschaffen, mit einem höhenverstellbaren Sattel. Im zweiten Schritt kann der Sattel abgenommen werden, jedoch bleibt es bei dem Haltegriff an der Lenkstange, wobei dieser Griff vorzugsweise ebenfalls höhenverstellbar ist. Schließlich ist weiterhin der Umbau mit einer T-Lenkstange möglich, ähnlich wie dies in Fig. 3 und 4 gezeigt ist.

## Patentansprüche

1. Fahrgerät für Kleinkinder mit einem Trittbrett (1), einem daran befestigten vorderen (2) und hinteren (3) Fahrwerksträger, wobei der vordere Fahrwerksträger (2) zwei Räder und der hintere Fahrwerksträger (3) ein Rad trägt, einer vertikalen Lenkstange (11), die mit dem vorderen Fahrwerksträger verbunden ist, und einer Griffeinrichtung (16) am oberen Teil der Lenkstange, wobei die Steuerung des Fahrgeräts alleine durch Gewichtsverlagerung erfolgt und die Lenkstange (11) lediglich die Griffeinrichtung (16), jedoch keinen Lenker enthält, und wobei das Fahrgerät weiterhin eine Sitzeinrichtung (12) aufweist, wobei die Sitzeinrichtung (12) an der Lenkstange befestigt ist, und, dass die Sitzeinrichtung (12) im vorderen Teil in eine integral ausgeführte Befestigungseinrichtung (24) übergeht, die im montierten Zustand die Lenkstange (11) ummantelt.

2. Fahrgerät nach Anspruch 1, **dadurch gekennzeichnet, dass** das Fahrgerät einem Kickboard angenähert ist, mit zwei großen Vorderrädern (8) und einem kleineren Hinterrad (5).

3. Fahrgerät nach Anspruch 1 oder 2, **dadurch gekennzeichnet, dass** die Griffeinrichtung (16) ringförmig ausgebildet ist, vorzugsweise mit elliptischer Form.

4. Fahrgerät nach einem der vorherigen Ansprüche, **dadurch gekennzeichnet, dass** die Sitzeinrichtung (12) mit der Lenkstange (11) verbunden ist.

5. Fahrgerät nach einem der vorherigen Ansprüche, **dadurch gekennzeichnet, dass** die Sitzeinrichtung (12) eine weiche Polsterung (15, 23), vorzugsweise aus einem Schaumstoff aufweist.

6. Fahrgerät nach einem der vorherigen Ansprüche, **dadurch gekennzeichnet, dass** die Sitzeinrichtung (12) eine Unterkonstruktion aus Aluminium aufweist, und eine Strebe (14) aufweist, mit der sich der hintere Teil der Sitzeinrichtung gegen das untere Teil der Lenkstange (11) abstützt.

7. Fahrgerät nach einem der vorherigen Ansprüche, **dadurch gekennzeichnet, dass** die Sitzeinrichtung gebogen und vorzugsweise bananenförmig ausgeführt ist.

8. Fahrgerät nach einem der vorherigen Ansprüche, **dadurch gekennzeichnet, dass** die Sitzeinrichtung (12) im hinteren Bereich einen Haltegriff (22) aufweist.

9. Fahrgerät nach einem der vorherigen Ansprüche, **dadurch gekennzeichnet, dass** das Fahrgerät am vorderen Fahrwerksträger (2) eine Basis (10) aufweist, in die verschiedene Lenkstangenarten verschraubbar oder einsteckbar sind, wobei die verschiedenen Lenkstangenarten umfassen: eine kurze Lenkstange mit ringförmigem Haltegriff und eine an der Lenkstange befestigte Sitzeinrichtung.

10. Fahrgerät nach Anspruch 9, **dadurch gekennzeichnet, dass** der vordere Fahrwerksträger (2) eine Achsschenkellenkung aufweist und die beiden Vorderräder (8) jeweils einen Sturz aufweisen, so dass sich die beiden Räder nach innen neigen.

## Claims

1. Vehicle for infants comprising a footboard (1), a front (2) and rear (3) chassis support fixed thereto, the front chassis support (2) supporting two wheels and the rear chassis support (3) supporting one wheel, a vertical steering bar (11) connected to the front chassis support, and a gripping means (16) at the upper part of the steering bar, the vehicle being steered only by shifting weight and the steering bar (11) comprising only the gripping means (16), but no steering mechanism, and the vehicle furthermore comprising a seat means (12), wherein the seat means (12) is fixed to the steering bar, and the seat means (12) changes into an integrally formed attachment means (24) which encases the steering bar (11) when assembled.

2. Vehicle according to claim 1, **characterised in that** the vehicle is approximated to a kickboard comprising two large front wheels (8) and one smaller rear wheel (5).

3. Vehicle according to either claim 1 or claim 2, **characterised in that** the gripping means (16) has an annular design, preferably having an elliptic shape.

4. Vehicle according to any of the preceding claims, **characterised in that** the seat means (12) is connected to the steering bar (11).

5. Vehicle according to any of the preceding claims, **characterised in that** the seat means (12) comprises a soft padding (15, 23), preferably made of foam.

6. Vehicle according to any of the preceding claims, **characterised in that** the seat means (12) comprises a sub-structure made of aluminium, and a crossbar (14) by means of which the rear part of the seat means supports itself against the lower part of the steering bar (11).

7. Vehicle according to any of the preceding claims, **characterised in that** the seat means is bent and preferably shaped like a banana.

8. Vehicle according to any of the preceding claims, **characterised in that** the seat means (12) comprises a handle (22) in the rear region.

9. Vehicle according to any of the preceding claims, **characterised in that** the vehicle comprises a base (10) at the front chassis support (2) into which different types of steering bar can be screwed or fitted, the different types of steering bar comprising: a short steering bar having an annular handle and a seat means fixed to the steering bar.

10. Vehicle according to claim 9, **characterised in that** the front chassis support (2) comprises a double-pivot steering and the two front wheels (8) each have an inclination, such that the two wheels are tilted inwards.

## Revendications

1. Véhicule pour de jeunes enfants comprenant un marchepied (1) auquel sont fixés des supports de cadre avant (2) et arrière (3), dans lequel le support de cadre avant (2) porte deux roues et le support de cadre arrière (3) porte une roue, une barre de direction (11) verticale qui est reliée au support de cadre avant, et un dispositif de poignée (16) sur la partie supérieure de la barre de direction, dans lequel la commande de direction du véhicule ne s'effectue que par un déplacement de poids, et dans lequel le véhicule comporte en outre un dispositif de siège (12) et la barre de direction ne comporte pas de mécanisme de direction mais uniquement le dispositif de poignée (16), dans lequel le dispositif de siège (12) est fixé à la barre de direction, et le dispositif de siège (12) se prolonge dans la partie avant par un dispositif de fixation (24) intégré qui enveloppe la barre de direction (11) à l'état monté.

2. Véhicule selon la revendication 1, **caractérisé en ce que** le véhicule est similaire à une trottinette de type kickboard, avec deux grandes roues avant (8) et une roue arrière (5) plus petite.

3. Véhicule selon la revendication 1 ou 2, **caractérisé en ce que** le dispositif de poignée (16) présente une forme annulaire, et préférablement une forme elliptique.

4. Véhicule selon l'une des revendications précédentes, **caractérisé en ce que** le dispositif de siège (12) est relié à la barre de direction (11).

5. Véhicule selon l'une des revendications précédentes, **caractérisé en ce que** le dispositif de siège (12) comporte une garniture molle (15, 23), préférablement en mousse.

6. Véhicule selon l'une des revendications précédentes, **caractérisé en ce que** le dispositif de siège (12) comporte un châssis de base en aluminium et une traverse (14) grâce à laquelle la partie arrière du dispositif de siège s'appuie contre la partie inférieure de la barre de direction (11).

7. Véhicule selon l'une des revendications précédentes, **caractérisé en ce que** le dispositif de siège est incurvé et présente préférablement une forme de banane.

8. Véhicule selon l'une des revendications précédentes, **caractérisé en ce que** le dispositif de siège (12) comporte une poignée (22) dans sa partie arrière.

9. Véhicule selon l'une des revendications précédentes, **caractérisé en ce que** le véhicule comporte sur le support de cadre avant (2) une base (10) dans laquelle différents types de barre de direction peuvent être vissés ou emboîtés, dans lequel les différents types de barre de direction comprennent une barre de direction courte avec une poignée annulaire et un dispositif de siège fixé à la barre de direction.

10. Véhicule selon la revendication 9, **caractérisé en ce que** le support de cadre avant (2) comporte une direction à parallélogramme de direction, et les deux roues avant (8) présentent respectivement un carrossage, de telle sorte que les deux roues sont inclinées vers l'intérieur.
